# NOUVEAU FASCICULE DE BREVET EUROPEEN

(11) **EP 0 293 292 B2**
(45) Date de publication et mention de la décision concernant l'opposition: **27.11.1996**
(45) Mention de la délivrance du brevet: 14.08.1991
(21) Numéro de dépôt: 88401256.8
(22) Date de dépôt: 24.05.1988
(51) Int. Cl.: C09D 5/03, C09D 177/00, C08L 77/00

(54) **Poudres pour revêtement à base de polyamide et substrat portant un tel revêtement**
Polyamidbeschichtungspulver und Substrat mit einer solchen Beschichtung
Polyamide coating powders and substrate covered by these coating powders

(30) Priorité: 25.05.1987 FR 8707345
(43) Date de publication de la demande: 30.11.1988
(73) Titulaire: ELF ATOCHEM S.A., 92800 Puteaux (FR)
(72) Inventeur: Lescaut, Pierre, F-27300 Bernay (FR)
(74) Mandataire: Eggert, Hans-Gunther, Dr.

(56) Documents cités:
- EP-A- 0 033 592
- DE-A- 2 327 971
- DE-A- 2 755 169
- US-A- 4 248 977
- PATENT ABSTRACTS OF JAPAN, vol. 4, no. 65 (C-10)[547], 16 mai 1980, page 77 C 10; & JP-A-55 31 809

## Description

La présente invention a pour objet l'utilisation d'une combinaison pulvérulente à base de polyamide pour le revêtement de substrat, ladite composition étant destinée notamment à la réalisation de revêtement par dépôt et fusion de ladite composition sur un substrat. Elle conceme également les substrat ainsi revêtus.

On a déjà décrit (brevet français 2.207.163) des poudres de polyamide ou copolyamide pour revêtement, dont l'adhérence au substrat métallique est améliorée grâce à l'addition, dans la composition de la poudre, d'un corps solide ayant une action dissolvante à chaud sur lesdits polyamides et copolyamides: de tels corps solides peuvent consister en phénols solides, éventuellement combinés à des mono- ou polyisocyanates ou à des isocyanurates.

Dans le brevet américain 4.248,977, on a proposé d'améliorer l'adhérence des poudres polyamides par addition d'une résine époxy réactive et d'un acétal polyvinylique.

La présente invention a pour objet l'utilisation d'une nouvelle composition pulvérulente à base de polyamide, ladite composition étant caractérisée en ce qu'elle comprend, outre le polyamide, au moins un polyalkyl(meth)acrylate.

L'invention concerne également les substrats portant au moins sur une partie de leur surface un revêtement formé à partir d'une telle composition.

L'invention concerne plus particulièrement l'utilisation d'une composition pulvérulente comprenant, pour 100 parties de polyamide :
- de 5 à 40 parties de polyalkyl(meth)acrylate.

A titre préférentiel, la composition comprend, pour 100 parties de polyamide :
- de 10 à 25 parties de polyalkyl(meth)acrylate.

La taille moyenne des grains ou particules constituant la composition pulvérulente est généralement comprise entre 5 et 500 µm et de préférence comprise entre 10 et 250 µm.

Dans les compositions conformes à l'invention, on peut choisir le polyamide parmi les différentes familles de produits répondant à ce qualificatif.

A titre d'illustration de ces polyamides, on peut citer :
- les polyamides obtenus à partir de lactames ou d'aminoacides dont la chaîne hydrocarbonée possède un nombre d'atomes de carbone compris entre 4 et 20 comme, par exemple, le caprolactame, l'oenantholactame, le dodécanolactame, l'undécanolactame, l'acide amino 11-undécanoïque, l'acide amino 12-dodécanoïque,
- les produits de condensation d'un acide dicarboxylique avec une diamine comme, par exemple, les polyamides 6.6, 6.9, 6.10, 6.12, 9.6, produits de condensation de l'hexaméthylène diamine avec l'acide adipique, l'acide azélaïque, l'acide sébacique, l'acide dodécanédioïque-1,12 et de la nonaméthylène diamine avec l'acide adipique,
- les copolyamides résultant de la polymérisation des divers monomères cités ci-dessus.

Parmi ces polyamides on citera tout particulièrement:
- le polyamide 6, obtenu par polymérisation de l'ε-caprolactame,
- le polyamide 11, obtenu par polycondensation de l'acide amino-11 undécanoïque,
- le polyamide 12, obtenu par polycondensation de l'acide amino-12 dodécanoïque ou du dodécanolactame et,
- les copolyamides obtenus par la polymérisation de deux ou de trois des monomères cités ci-dessus.

D'une manière générale, la viscosité inhérente (mesurée à 20°C pour une solution à 0,5 g pour 100 ml de metacrésol) des polyamides est comprise entre 0,20 et 2,0.

Ces poudres de polyamides peuvent être obtenues selon des techniques maintenant bien connues, telles que le broyage de granulés, la dissolution à chaud des granulés dans des solvants et leur précipitation par refroidissement ou encore directement en utilisant des procédés de polymérisation anionique du ou des monomères dans des solvants dans lesquels le polymère se sépare sous forme de poudre.

Au sens de l'invention, l'expression "polyalkyl(meth)acrylate" désigne le produit résultant de la polymérisation ou copolymérisation d'un ou plusieurs (meth)acrylates d'alkyle ayant 1 à 12 atomes de carbone dans le groupement alkyle du monomère.

A titre d'illustration de tels monomères, on peut citer notamment les esters d'alkyle des acides acrylique et méthacrylique dans lesquels le groupement alkyle dérive d'un alcool aliphatique et est notamment un groupement méthyle, éthyle, butyle, isobutyle, hexyle, heptyle, octyle, isooctyle, éthyl-2 hexyle.

L'expression "polyalkyl(meth)acrytate" s'étend aussi au produit résultant de la copolymérisation d'un ou plusieurs des monomères précités avec un monomère polymérisable portant ou non un groupement fonctionnel. A titre d'iilustration de tels monomères, on peut citer les hydrocarbures aliphatiques ou aromatiques portant au moins une double liaison oléfinique, tel que notamment le styrène, les acides mono- et di-carboxyliques porteurs d'une double liaison oléfinique tels que les acides (meth)acryliques, crotonique, maléïque, itaconique, fumarique; les esters vinyliques renfermant généralement 5 à 15 atomes de carbone tels que les esters vinyliques d'acides versatiques; les composés à groupement fonctionnel hydroxyle, tel que le (meth)acrylate d'hydroxy-2 éthyle, le (meth)acrylate d'hydroxy-2 propyle, le (meth)acrytate de méthyl-1 hydroxy-2 éthyle; les composés à groupement époxy tels que le (meth)acrylate de glycidyle ; le N-méthylol(meth)acrylamide ; les composés à groupement amino tels que le (meth)acrylate de N,N-diméthylaminoéthyle, le (meth)acrylate de N-tertiobutylaminoéthyle, le (meth)acrylate de N-tertiobutylaminobutyle.

On utilise en général des polyalkyl(meth)acrylates de masse moléculaire généralement comprise entre 50.000 et 1.500.000 et de préférence entre 250.000 et 1.000.000.

Ces polymères, dont la préparation est décrite dans la littérature et ne constitue pas en soi un objet de la présente invention, peuvent être mis en oeuvre sous forme de poudre dont la granulométrie est aussi proche que possible de celle du polyamide.

Il va sans dire que, aussi bien pour le polyamide lui-même que pour le polyalkyl(meth)acrylate, l'uniformisation recommandée en ce qui conceme la dimension des particules peut être obtenue aussi bien par mélange de produits ayant déjà ladite dimension que par broyage d'un mélange de produits de granulométries différentes. Selon une variante utilisée de préférence, on mélange à sec les différents constituants dont la granulométrie peut être différente puis provoque la fusion de l'ensemble, extrude le produit en résultant et broie à la dimension voulue les granulés obtenus à partir du jonc ainsi extrudé.

Les nouvelles compositions définies ci-avant par leurs constituants essentiels, peuvent renfermer les additifs habituels pour poudres pour revêtement. Parmi ces additifs, et à titre purement indicatif, on pourra mentionner :
- les pigments et colorants tels que le dioxyde de titane, le noir de carbone, les oxydes de fer, cadmium, les colorants organiques,
- les anti-oxydants, tels que l'hydroxyphénylhexaméthylène diamine, le tétrakis [méthylène(di-t-butyl-3,5 hydroxy-4)hydrocinnamate] méthane, le N,N'hexaméthylène bis(di-t-butyl-3,5 hydroxy-4)hydrocinnamide,
- les stabilisants tels que l'hypophosphite de sodium ou les agents anti U.V.,
- les agents de tension, c'est-à-dire favorisant l'étalement tels que l'oxyde de zinc ou les résines acryliques traitées superficiellement par des composés siliciques ou organosiliciques,
- les charges telles que les silicates d'aluminium, de magnésium, de potassium, le carbonate de calcium ou encore les particules métalliques,
- les plastifiants, tels que le butylbenzène sulfonamide,
- les promoteurs d'adhésion, tels que les polycondensats phénol/épichlorhydrine/glycol, et d'une manière générale tous les additifs minéraux, organiques ou macromoléculaires dont l'emploi est maintenant bien connu pour modifier ou apporter telle ou telle propriété aux revêtements.

Les compositions conformes à l'invention peuvent, d'une manière générale, renfermer jusqu'à 100% en poids d'additifs par rapport au poids du polyamide, proportion plus généralement comprise entre 10 et 50%.

Ces compositions peuvent être appliquées sur le substrat par projection électrostatique, en particulier lorsque le substrat est métallique. Dans cette hypothèse, on utilisera avantageusement des substrats en acier, en acier galvanisé, en cuivre, en aluminium ou en alliage d'aluminium.

Selon une technique connue et qui ne constitue pas en elle-même un objet de l'invention, le substrat métallique a pu subir un ou plusieurs-des traitements de surface suivants, cette liste n'étant pas limitative : dégraissage grossier, brossage, dégraissage fin, rinçage à chaud, phosphatation, chromatation, rinçage à froid, rinçage chromique, décapage mécanique, projection d'abrasif.

Le dépôt de la poudre de revêtement peut se faire directement sur le substrat. Selon une variante, ce substrat a pu recevoir un dépôt préalable d'une solution ou suspension de primaire, ledit primaire pouvant par exemple consister en résine époxy et/ou résine phénolique éventuellement associée à un butyral polyvinylique ou en un précondensat époxyphénolique ou encore en une combinaison de ces mélanges et précondensats.

Le dépôt de la composition de poudre se fait généralement sur le primaire après séchage de celui-ci.

D'une manière générale l'épaisseur du revêtement formé à partir des compositions conformes à l'invention est comprise entre 5 et 500 µm.

Le dépôt de la composition à la surface du substrat est suivi d'un chauffage à une température permettant la fusion de la composition de polyamide et la formation d'un revêtement continu. Le chauffage peut en particulier, selon la nature du polyamide mis en oeuvre, être réalisé entre 100 et 300°C, pendant une durée de l'ordre de quelques minutes, par exemple de 1 à 30 mn.

Cette opération est habituellement suivie du refroidissement du revêtement à l'air ou par immersion dans l'eau ou tout autre liquide approprié.

Les revêtements fabriqués à partir des compositions conformes à l'invention présentent un ensemble de propriétés remarquables. Indépendemment de leur excellente adhérence au substrat, ces revêtements présentent une dureté superficielle élevée, une bonne résistance à l'abrasion, à l'eau chaude, au brouillard salin et aux hydrocarbures.

Les exemple suivants illustrent l'invention.

### EXEMPLE 1

Une poudre de granulométrie inférieure à 0,1 mm obtenue par broyage de granulés de matière réalisée par mélange à l'état fondu de 100 parties en poids de polyamide 11 de viscosité inhérente de 1 et 20 parties en poids de polyméthyl méthacrylate, est appliquée par le procédé du champ électrostatique sur un substrat en acier dégraissé au solvant chloré.

Le métal, ainsi recouvert de poudre, est élevé en température par passage en étuve réglée à 200°C, pendant une durée de 6 minutes, afin d'assurer par fusion de la poudre, la formation d'un film protecteur continu d'épaisseur 150 µ.

Après refroidissement, l'ensemble est soumis, dans une chambre fermée, à l'épreuve de projection d'un brouillard d'eau contenant 5% de NaCl, à la température de 35°C.

Après 500 heures d'épreuve, le revêtement a conservé une bonne adhérence sur l'acier et il n'est observé aucun cloquage ni oxydation.

### EXEMPLE 2

Une poudre de granulométrie inférieure à 0,08 mm, obtenue par broyage d'un mélange à l'état fondu de 100 parties en poids de polyamide 11 de viscosité inhérente de 1, 8 parties en poids de polyméthylméthacrylate, 11 parties en poids d'alkylphénolique, est déposée par le procédé électrostatique sur la paroi inteme d'un tube en acier, préchauffé à 250°C, ayant subi un décapage mécanique donnant une rugosité de 0,05 mm et un dépôt de 0,01 mm de primaire constitué de résine phénolique associée à un butyral vinylique et un chromate de zinc.

L'épaisseur totale du revêtement ainsi obtenu est de 370 µ ± 50 µ.

Dans le tube ainsi obtenu, fermé à ses extrémités par des brides pleines avec joints d'étanchéité, formant un volume de 9 litres, il est placé 5,1 litres d'eau à 3% de NaCl et 0,9 litre de gazole. L'ensemble est soumis successivement aux pressions de 15 bars par introduction de H2S puis 30 bars par introduction de CO₂ et enfin 150 bars par l'introduction de CH₄.

L'ensemble, tube, fluides et gaz est élevé à la température de 70°C et maintenu pendant 10 jours.

En fin d'essai, la relaxation de la pression est réalisée en 15 minutes, soit une vitesse de décompression de 10 bars/minute.

Ce revêtement déposé sur les parois ne montre aucun changement par décollement, cloquage ou gonflement et le métal sous-jacent ne présente aucun point de corrosion, que ce soit dans la zone contenant la phase liquide ou dans celle de la phase gazeuse.

## Revendications

1. Utilisation d'une composition pulvérulente à base de polyamide pour le revêtement de substrats, caractérisée en ce qu'elle comprend, outre le polyamide, au moins un polyalkyl(meth)acrylate.

2. Utilisation d'une composition selon la revendication 1, caractérisé en ce qu'elle comprend, pour 100 parties de polyamide :
• de 5 à 40 parties de polyalkyl(meth)acrylate.

3. Utilisation d'une composition selon l'une quelconque des revendications 1 ou 2, caractérisée en ce qu'elle comprend pour 100 parties de polyamide :
• de 10 à 25 parties de polyalkyl(meth)acrylate.

4. Utilisation d'une composition selon l'une quelconque des revendications 1 à 2, caractérisée en ce que le polyamide est choisi dans le groupe constitué par:
- le polyamide 6, obtenu par polymérisation de l'ε-caprolactame,
- le polyamide 11, obtenu par polycondensation de l'acide amino-11 undécanoïque,
- le polyamide 12, obtenu par polycondensation de l'acide amino-12 dodécanoïque ou du dodécanolactame et,
- les copolyamides obtenus par la polymérisation de deux ou de trois des monomères cités ci-dessus.

5. Utilisation d'une composition selon l'une quelconque des revendications 1 à 4, caractérisée en ce que le polyalkyl(meth)acrylate résulte de la polymérisation ou copolymérisation d'un ou plusieurs (meth)acrylates d'alkyle ayant 1 à 12 atomes de carbone dans le groupement alkyle du monomère.

6. Utilisation d'une composition selon la revendication 5, caractérisée en ce que le polyalkyl(meth)acrylate résulte de la polymérisation ou copolymérisation d'un ou plusieurs esters d'alkyle des acides acrylique et méthacrylique dans lesquels le groupement alkyle dérive d'un alcool aliphatique et est notamment un groupement méthyle, éthyle, butyle, isobutyle, hexyle, heptyle, octyle, isooctyle, éthyl-2 hexyle.

7. Utilisation d'une composition selon l'une quelconque des revendications 1 à 6, caractérisée en ce qu'elle se présente sous forme de poudre dont la taille moyenne des grains ou particules est comprise entre 5 et 500 µm.

8. Utilisation d'une composition selon la revendication 7, caractérisée en ce que la taille moyenne des grains ou particules est comprise entre 10 et 250 µm.

9. Utilisation d'une composition selon l'une quelconque des revendications 1 à 8, caractérisée en ce qu'elle comprend, en outre, au moins un additif choisi dans le groupe constitué par les pigments, les colorants, les antioxydants, les stabilisants, les agents de tension, les charges, les plastifiants, les promoteurs d'adhésion.

10. Les substrats portant au moins sur une partie de leur surface un revêtement formé à partir d'une composition telle que définie dans l'une quelconque des revendications 1 à 9.

11. Substrats revêtus selon la revendication 10 en métal choisi dans le groupe constitué par l'acier, l'acier galvanisé, le cuivre, l'aluminium et les alliages d'aluminium.

## Patentansprüche

1. Verwendung eines pulverförmigen Mittels auf der Basis von Polyamid zum Beschichten von Substraten, dadurch gekennzeichnet, daß es neben dem Polyamid mindestens ein Polyalkyl(meth)acrylat enthält.

2. Verwendung eines Mittels nach Anspruch 1, dadurch gekennzeichnet, daß es auf 100 Teile Polyamid 5 bis 40 Teile Polyalkyl(meth)acrylat enthält.

3. Verwendung eines Mittels nach einem der Ansprüche 1 oder 2, dadurch gekennzeichnet, daß es auf 100 Teile Polyamid 10 bis 25 Teile Polyalkyl(meth)acrylat enthält.

4. Verwendung eines Mittels nach einem der Ansprüche 1 bis 3, dadurch gekennzeichnet, daß das Polyamid ausgewählt ist aus der Gruppe bestehend aus:
- Polyamid 6, erhalten durch Polymerisation von Caprolactam,
- Polyamid 1.1, erhalten durch Polykondensation von 11-Aminoundecansäure,
- Polyamid 12, erhalten durch Polykondensation von 12-Aminododecansäure oder Dodecanlactam, und
- den Copolyamiden, erhalten durch Polymerisation von zwei oder drei der oben erwähnten Monomere.

5. Verwendung eines Mittels nach einem der Ansprüche 1 bis 4, dadurch gekennzeichnet, daß das Polyalkyl(meth)acrylat erhalten wird durch Polymerisation oder Copolymerisation von einem oder mehreren Alkyl(meth)acrylaten mit 1 bis 12 Kohlenstoffatomen in der Alkylgruppe des Monomers.

6. Verwendung eines Mittels nach Anspruch 5, dadurch gekennzeichnet, daß das Polyalkyl(meth)acrylat erhalten wird durch Polymerisation oder Copolymerisation von einem oder mehreren Alkylestern von Acrylsäure und Methacrylsäure, bei denen die Alkylgruppe abgeleitet ist von einem aliphatischen Alkohol und insbesondere eine Methyl-, Ethyl-, Butyl-, Isobutyl-, Hexyl-, Heptyl-, Octyl-, Isooctyl-, 2-Ethylhexylgruppe ist.

7. Verwendung eines Mittels nach einem der Ansprüche 1 bis 6, dadurch gekennzeichnet, daß es in Form eines Pulvers mit einer mittleren Korn- oder Teilchengröße zwischen 5 und 100 µm vorliegt.

8. Verwendung eines Mittels nach Anspruch 7, dadurch gekennzeichnet, daß die mittlere Korn- oder Teilchengröße zwischen 10 und 250 µm liegt.

9. Verwendung eines Mittels nach einem der Ansprüche 1 bis 8, dadurch gekennzeichnet, daß es unter anderem mindestens ein Additiv enthält, ausgewählt aus der Gruppe bestehend aus den Pigmenten, den Farbstoffen, den Antioxidantien, den Stabilisatoren, den grenzflächenaktiven Mitteln, den Füllstoffen, den Weichmachern und den Haftungsverbesserern.

10. Substrate, enthaltend mindestens auf einem Teil ihrer Oberfläche eine Beschichtung bzw. einen Überzug, gebildet aus einem Mittel, wie in einem der Ansprüche 1 bis 9 definiert.

11. Beschichtete Substrate nach Anspruch 10 aus Metall, ausgewählt aus der Gruppe bestehend aus Stahl, galvanisiertem Stahl, Kupfer, Aluminium und Aluminiumlegierungen.

## Claims

1. Use of a polyamide-based powder composition for coating substrates, characterised in that, besides the polyamide, it comprises at least one polyalkyl(meth)acrylate.

2. Use of a composition according to claim 1, characterised in that it comprises from 5 to 40 parts of polyalkyl(meth)acrylate per 100 parts of polyamide.

3. Use of a composition according to either of claims 1 and 2, characterised in that it comprises from 10 to 25 parts of polyalkyl(meth)acrylate per 100 parts of polyamide.

4. Use of a composition according to either of claims 1 to 2, characterised in that the polyamide is chosen from the group consisting of:
- polyamide 6, obtained by polymerisation of caprolactam,
- polyamide 11, obtained by polycondensation of 11-aminoundecanoic acid,
- polyamide 12, obtained by polycondensation of 12-aminododecanoic acid or dodecanolactam, and
- copolyamides obtained by the polymerisation of two or three of the abovementioned monomers.

5. Use of a composition according to any one of claims 1 to 4, characterised in that the polyalkyl(meth)acrylate results from the polymerisation or copolymerisation of one or more alkyl(meth)acrylates containing 1 to 12 carbon atoms in the alkyl group of the monomer.

6. Use of a composition according to claim 5, characterised in that the polyalkyl(meth)acrylate results from the polymerisation or copolymerisation of one or more alkyl esters of acrylic and methacrylic acids in which the alkyl group is derived from an aliphatic alcohol and is especially a methyl, ethyl, butyl, isobutyl, hexyl, heptyl, octyl, isooctyl or 2-ethylhexyl group.

7. Use of a composition according to any one of claims 1 to 6, characterised in that it is in the form of a powder whose mean grain or particle size is between 5 and 500 µm.

8. Use of a composition according to claim 7, characterised in that the mean grain or particle size is between 10 and 250 µm.

9. Use of a composition according to any one of claims 1 to 8, characterised in that it additionally comprises at least one additive chosen from the group consisting of pigments, colorants, antioxidants, stabilisers, tension agents, filters, plasticisers and adhesion promoters.

10. The substrates carrying on at least part of their surface a coating made from a composition such as defined in any one of claims 1 to 9.

11. Substrates coated according to claim 10 with a metal chosen from the group consisting of steel, galvanised steel, copper, aluminium and aluminium alloys.
